# EUROPEAN PATENT SPECIFICATION

(11) **EP 4 147 917 B1**
(45) Date of publication and mention of the grant of the patent: **13.11.2024**
(21) Application number: 21195523.2
(22) Date of filing: 08.09.2021
(51) Int. Cl.: B60R 19/34

(54) **A VEHICLE CRASH BOX AND A VEHICLE BUMPER STRUCTURE COMPRISING THE VECHILE CRASH BOX**
FAHRZEUGCRASHBOX UND FAHRZEUGSTOSSFÄNGERSTRUKTUR MIT DER FAHRZEUGCRASHBOX
BOÎTE-TAMPON DE VÉHICULE ET STRUCTURE DE PARE-CHOCS DE VÉHICULE COMPRENANT LA BOÎTE-TAMPON DE VÉHICULE

(43) Date of publication of application: 15.03.2023
(73) Proprietor: AUTOTECH ENGINEERING S.L., 48340 Amorebieta-Etxano, Bizkaia (ES); GESTAMP PALAU, S.A., 08184 Palau Solitá i Plegamans (Barcelona) (ES); GESTAMP LEVANTE, S.A., 46440 Almussafes (Valencia) (ES); GESTAMP METALBAGES, S.A., 08251 Santpedor (Barcelona) (ES)
(72) Inventor: NILSSON, Johan, 975 93 Luleå (SE)
(74) Representative: Ehrner & Delmar Patentbyrå AB

(56) References cited:
- EP-A1- 2 979 932
- WO-A1-2011/058623
- DE-A1- 102010 023 987
- DE-A1- 102016 102 534
- FR-A1- 2 939 739
- US-A1- 2013 241 219

## Description

### Technical Field

Aspects of the present invention relate to a vehicle crash box for attaching a bumper beam to a vehicle, wherein the vehicle crash box comprises a tubular member having a longitudinal extension. Further, aspects of the present invention relate to a vehicle bumper structure comprising a bumper beam and such a vehicle crash box.

### Background of the Invention

In the design of a frame portion of a vehicle, there is a compromise between weight and strength. An advantageous manner of obtaining a good compromise is to produce a frame portion from one or more metal plates, or metal alloy plates, formed into a requested shape, e.g. a hat profile.

In general, a frame portion of a vehicle is formed to have a certain rigidity since it may receive various impacts from the outside. At the same time, some frame portions should allow deformation for absorbing impacts, or absorbing energy from impacts, when receiving an overload, e.g. due to a collision with an external object, e.g. another vehicle or a stationary object, e.g. a tree. One example of a vehicle frame portion that should be allowed to deform for absorbing impacts while being rigid is the bumper beam structure, or the vehicle crash box attaching the bumper beam to the vehicle.

EP2979932A1 is the closest prior art and discloses: a vehicle crash box for attaching a bumper beam to a vehicle, wherein the vehicle crash box is attachable to the vehicle, wherein the vehicle crash box comprises a tubular member having a longitudinal extension extending in a longitudinal direction, wherein the tubular member comprises one or more longitudinal walls having a longitudinal extension extending in the longitudinal direction, wherein the vehicle crash box comprises one or more flanges integrally formed with one or more longitudinal walls of the one or more longitudinal walls of the tubular member whereas the one or more flanges and the one or more longitudinal walls are formed from a single piece.

### Summary of the Invention

The inventor of the present invention has found drawbacks in conventional solutions for vehicle crash boxes. For example, the inventor of the present invention has found that some conventional solutions for vehicle crash boxes do not provide a sufficient resistance to high loads during a collision.

An object of the invention is to provide a solution which mitigates or solves drawbacks and problems of conventional solutions.

The above and further objects are solved by the subject matter of the independent claim. Further advantageous embodiments of the invention can be found in the dependent claims.

According to a first aspect of the invention, the above mentioned and other objects are achieved with a vehicle crash box for attaching a bumper beam to a vehicle,
wherein the vehicle crash box is attachable to the vehicle,
wherein the vehicle crash box comprises a tubular member having a longitudinal extension extending in a longitudinal direction,
wherein the tubular member comprises one or more longitudinal walls having a longitudinal extension extending in the longitudinal direction,
wherein the vehicle crash box comprises one or more flanges integrally formed with one or more longitudinal walls of the one or more longitudinal walls of the tubular member in that the one or more flanges and the one or more longitudinal walls are formed from a single piece by way of hot press forming or cold working, and
wherein the flange forms one or more oblong openings for one or more welds for the attachment of the flange to the bumper beam.

An advantage of the vehicle crash box according to the first aspect is that the rigidity and reinforcement of a vehicle bumper structure including one or more embodiments of the vehicle crash box according to the first aspect for attaching a bumper beam to a vehicle is improved in order to prevent penetration upon collisions while maintaining or providing an advantageous deformation of the vehicle bumper structure including one or more embodiments of the vehicle crash box according to the first aspect for absorbing impacts, or absorbing energy from impacts.

By means of the innovative flange having one or more oblong openings, the vehicle crash box can be efficiently attached to the bumper beam by way of one or more welds in order to improve the rigidity and reinforcement of the vehicle bumper structure including one or more embodiments of the vehicle crash box according to the first aspect. By means of the innovative flange having one or more oblong openings, the amount of weld in the interface of attachment between the vehicle crash box and the bumper beam, which is subjected to high loads upon a collision, for example a high-speed collision, can be increased, and thereby the strength of said interface of attachment can be increased. Thus, an advantage of the vehicle crash box according to the first aspect is that the interface for the attachment of the vehicle crash box to the bumper beam is improved and strengthened. An advantage of the vehicle crash box according to the first aspect is that the weld-interface for the attachment of the vehicle crash box to the bumper beam is improved and strengthened. The increased amount of weld in the interface for attaching the vehicle crash box to the bumper beam made possible by the innovative flange having one or more oblong openings improves and reinforces the attachment of the vehicle crash box to the bumper beam while maintaining or providing an advantageous deformation of the vehicle bumper structure including one or more embodiments of the vehicle crash box according to the first aspect for absorbing impacts or absorbing impact energy. An advantage of the vehicle crash box according to the first aspect is that a failure of a weld joint attaching the vehicle crash box to a bumper beam is prevented, or that the resistance to a failure of a weld joint attaching the vehicle crash box to a bumper beam is improved.

An advantage of the vehicle crash box according to the first aspect is that the performance of a vehicle bumper structure including one or more embodiments of the vehicle crash box according to the first aspect in collisions is improved, for example because the vehicle bumper structure including the vehicle crash box is made more rigid and more resistance to high loads while the vehicle bumper structure and the vehicle crash box can be deformed in a more controlled and more predicted manner.

An advantage of the vehicle crash box according to the first aspect is that an improved vehicle crash box is provided. An advantage of the vehicle crash box according to the first aspect is that an improved vehicle bumper structure including one or more vehicle crash boxes is provided.

The vehicle crash box may be a vehicle crash box for a motor vehicle with a combustion engine, an electric vehicle having one or more electrical machines and one or more electric batteries, or a hybrid vehicle including both a combustion engine and one or more electrical machines. For example, the vehicle may be a car or a truck.

According to an advantageous embodiment of the vehicle crash box according to the first aspect, the tubular member forms a closed space,
wherein the oblong opening of the flange is located outside the closed space.

An advantage of this embodiment is that the process of welding the vehicle crash box to a bumper beam is facilitated. An advantage of this embodiment is that the resistance to a failure of a weld joint attaching the vehicle crash box to a bumper beam is further improved. An advantage of this embodiment is that the attachment of the vehicle crash box to a bumper beam by way of one or more welds in order to improve the reinforcement of the vehicle bumper structure including the vehicle crash box is further improved. An advantage of this embodiment is that the performance of a vehicle bumper structure including one or more crash boxes according to this embodiment in collisions is further improved. A "closed space" mentioned above also includes spaces which are substantially, or essentially, closed. For example, there may one or more minor through-holes in one or more longitudinal walls of the tubular member, and/or the ends of the tubular member may be at least partly open.

According to a further advantageous embodiment of the vehicle crash box according to the first aspect, the tubular forms a closed space,
wherein the flange is located outside the closed space.

An advantage of this embodiment is that the process of welding the vehicle crash box to a bumper beam is facilitated. An advantage of this embodiment is that the resistance to a failure of a weld joint attaching the vehicle crash box to a bumper beam is further improved. An advantage of this embodiment is that the attachment of the vehicle crash box to a bumper beam by way of one or more welds in order to improve the reinforcement of the vehicle bumper structure including the vehicle crash box is further improved. An advantage of this embodiment is that the performance of a vehicle bumper structure including one or more crash boxes according to this embodiment in collisions is further improved.

According to another advantageous embodiment of the vehicle crash box according to the first aspect, the bumper beam comprises a first end, a second end and a middle, or intermediate, section located between the first and second ends,
wherein the vehicle crash box is configured to position the tubular member between the first end of the bumper beam and the middle section of the bumper beam, and
wherein the vehicle crash box is configured to position the flange between the first end of the bumper beam and the tubular member.

Thus, according to this embodiment, the flange together with the one or more oblong openings and the associated one or more welds are located toward one of the ends of the bumper beam when the vehicle crash box is attached to the bumper beam. The inventor of the invention has found that the loads on the interface for the attachment of the vehicle crash box to the bumper beam are especially high at this location upon a collision, for example a high-speed collision. Thus, by way of this embodiment, an increased amount of weld for attaching the vehicle crash box to the bumper beam can be applied here via the one or more oblong openings. An advantage of this embodiment is that the resistance to a failure of a weld joint attaching the vehicle crash box to a bumper beam is further improved. An advantage of this embodiment is that the attachment of the vehicle crash box to a bumper beam by way of one or more welds in order to improve the reinforcement of the vehicle bumper structure including the vehicle crash box is further improved. An advantage of this embodiment is that the performance of a vehicle bumper structure including one or more crash boxes according to this embodiment in collisions is further improved.

According to yet another advantageous embodiment of the vehicle crash box according to the first aspect, the flange has a transverse extension extending in a lateral direction in relation to the longitudinal direction. An advantage of this embodiment is that the performance of a vehicle bumper structure including one or more crash boxes according to this embodiment in collisions is further improved.

According to still another advantageous embodiment of the vehicle crash box according to the first aspect, the flange has a transverse extension extending in a direction transverse to the longitudinal direction. An advantage of this embodiment is that the performance of a vehicle bumper structure including one or more crash boxes according to this embodiment in collisions is further improved.

According to an advantageous embodiment of the vehicle crash box according to the first aspect, the flange has a transverse extension extending in a direction transverse to the longitudinal wall integrally formed with the flange. An advantage of this embodiment is that the performance of a vehicle bumper structure including one or more crash boxes according to this embodiment in collisions is further improved.

According to a further advantageous embodiment of the vehicle crash box according to the first aspect, the flange has a longitudinal extension extending in a direction transverse to the longitudinal direction. An advantage of this embodiment is that movement of the flange and of the vehicle crash box in relation to the bumper beam, or forces on the interface of attachment between the vehicle crash box and the bumper beam, in a direction transverse to the longitudinal direction is further prevented or further counteracted. However, movement of the flange in relation to the bumper beam, and/or forces on the interface of attachment between the vehicle crash box and the bumper beam, in the longitudinal direction is/are also prevented or counteracted by way of this embodiment. An advantage of this embodiment is that the resistance to a failure of a weld joint attaching the vehicle crash box to a bumper beam is further improved. An advantage of this embodiment is that the attachment of the vehicle crash box to a bumper beam by way of one or more welds in order to improve the reinforcement of the vehicle bumper structure including the vehicle crash box is further improved. An advantage of this embodiment is that the performance of a vehicle bumper structure including one or more crash boxes according to this embodiment in collisions is further improved.

According to another advantageous embodiment of the vehicle crash box according to the first aspect, the flange has a longitudinal extension extending in the longitudinal direction. An advantage of this embodiment is that movement of the flange and of the vehicle crash box in relation to the bumper beam, or forces on the interface of attachment between the vehicle crash box and the bumper beam, in the longitudinal direction is further prevented or further counteracted. However, movement of the flange in relation to the bumper beam, and/or forces on the interface of attachment between the vehicle crash box and the bumper beam, in a direction transverse to the longitudinal direction is/are also prevented or counteracted by way of this embodiment. An advantage of this embodiment is that the resistance to a failure of a weld joint attaching the vehicle crash box to a bumper beam is further improved. An advantage of this embodiment is that the attachment of the vehicle crash box to a bumper beam by way of one or more welds in order to improve the reinforcement of the vehicle bumper structure including the vehicle crash box is further improved. An advantage of this embodiment is that the performance of a vehicle bumper structure including one or more crash boxes according to this embodiment in collisions is further improved.

According to still an advantageous embodiment of the vehicle crash box according to the first aspect, the oblong opening has a longitudinal extension extending in the direction of the longitudinal extension of the flange. An advantage of this embodiment is that movement of the flange and of the vehicle crash box in relation to the bumper beam, or forces on the interface of attachment between the vehicle crash box and the bumper beam, in the direction of the longitudinal extension of the flange is further prevented or further counteracted. However, movement of the flange in relation to the bumper beam, and/or forces on the interface of attachment between the vehicle crash box and the bumper beam, in a direction transverse to the direction of the longitudinal extension of the flange is/are also prevented or counteracted by way of this embodiment. An advantage of this embodiment is that the resistance to a failure of a weld joint attaching the vehicle crash box to a bumper beam is further improved. An advantage of this embodiment is that the attachment of the vehicle crash box to a bumper beam by way of one or more welds in order to improve the reinforcement of the vehicle bumper structure including the vehicle crash box is further improved. An advantage of this embodiment is that the performance of a vehicle bumper structure including one or more crash boxes according to this embodiment in collisions is further improved.

According to yet another advantageous embodiment of the vehicle crash box according to the first aspect, the oblong opening has a longitudinal extension extending in a direction transverse to the direction of the longitudinal extension of the flange. An advantage of this embodiment is that movement of the flange and of the vehicle crash box in relation to the bumper beam, or forces on the interface of attachment between the vehicle crash box and the bumper beam, in a direction transverse to the direction of the longitudinal extension of the flange is further prevented or further counteracted. However, movement of the flange in relation to the bumper beam, and/or forces on the interface of attachment between the vehicle crash box and the bumper beam, in the direction of the longitudinal extension of the flange is/are also prevented or counteracted by way of this embodiment. An advantage of this embodiment is that the resistance to a failure of a weld joint attaching the vehicle crash box to a bumper beam is further improved. An advantage of this embodiment is that the attachment of the vehicle crash box to a bumper beam by way of one or more welds in order to improve the reinforcement of the vehicle bumper structure including the vehicle crash box is further improved. An advantage of this embodiment is that the performance of a vehicle bumper structure including one or more crash boxes according to this embodiment in collisions is further improved.

According to an advantageous embodiment of the vehicle crash box according to the first aspect, the flange has a longitudinal extension extending in a direction parallel to the longitudinal wall integrally formed with the flange. An advantage of this embodiment is that the performance of a vehicle bumper structure including one or more crash boxes according to this embodiment in collisions is further improved.

According to a further advantageous embodiment of the vehicle crash box according to the first aspect, the oblong opening has a longitudinal extension extending in a direction transverse to the longitudinal direction. An advantage of this embodiment is that movement of the flange and of the vehicle crash box in relation to the bumper beam, or forces on the interface of attachment between the vehicle crash box and the bumper beam, in a direction transverse to the longitudinal direction is further prevented or further counteracted. However, movement of the flange in relation to the bumper beam, and/or forces on the interface of attachment between the vehicle crash box and the bumper beam, in the longitudinal direction is/are also prevented or counteracted by way of this embodiment. An advantage of this embodiment is that the resistance to a failure of a weld joint attaching the vehicle crash box to a bumper beam is further improved. An advantage of this embodiment is that the attachment of the vehicle crash box to a bumper beam by way of one or more welds in order to improve the reinforcement of the vehicle bumper structure including the vehicle crash box is further improved. An advantage of this embodiment is that the performance of a vehicle bumper structure including one or more crash boxes according to this embodiment in collisions is further improved.

According to another advantageous embodiment of the vehicle crash box according to the first aspect, the oblong opening has a longitudinal extension extending in the longitudinal direction. An advantage of this embodiment is that movement of the flange and of the vehicle crash box in relation to the bumper beam, or forces on the interface of attachment between the vehicle crash box and the bumper beam, in the longitudinal direction is further prevented or further counteracted. However, movement of the flange in relation to the bumper beam, and/or forces on the interface of attachment between the vehicle crash box and the bumper beam, in a direction transverse to the longitudinal direction is/are also prevented or counteracted by way of this embodiment. An advantage of this embodiment is that the resistance to a failure of a weld joint attaching the vehicle crash box to a bumper beam is further improved. An advantage of this embodiment is that the attachment of the vehicle crash box to a bumper beam by way of one or more welds in order to improve the reinforcement of the vehicle bumper structure including the vehicle crash box is further improved. An advantage of this embodiment is that the performance of a vehicle bumper structure including one or more crash boxes according to this embodiment in collisions is further improved.

According to yet another advantageous embodiment of the vehicle crash box according to the first aspect, the bumper beam has a longitudinal extension configured to extend in a direction transverse to the longitudinal direction,
wherein the oblong opening has a longitudinal extension extending in a direction transverse to the direction of the longitudinal extension of the bumper beam.

An advantage of this embodiment is that movement of the flange and of the vehicle crash box in relation to the bumper beam, or forces on the interface of attachment between the vehicle crash box and the bumper beam, in a direction transverse to the direction of the longitudinal extension of the bumper beam, for example in a vertical direction when the vehicle crash box is mounted to a vehicle having wheels resting on the ground, is further prevented or further counteracted. However, movement of the flange in relation to the bumper beam, and/or forces on the interface of attachment between the vehicle crash box and the bumper beam, in the direction of the longitudinal extension of the bumper beam is/are also prevented or counteracted by way of this embodiment. An advantage of this embodiment is that the resistance to a failure of a weld joint attaching the vehicle crash box to a bumper beam is further improved. An advantage of this embodiment is that the attachment of the vehicle crash box to a bumper beam by way of one or more welds in order to improve the reinforcement of the vehicle bumper structure including the vehicle crash box is further improved. An advantage of this embodiment is that the performance of a vehicle bumper structure including one or more crash boxes according to this embodiment in collisions is further improved.

According to still another advantageous embodiment of the vehicle crash box according to the first aspect, the oblong opening has a longitudinal extension extending in a direction parallel to the longitudinal wall integrally formed with the flange. An advantage of this embodiment is that the performance of a vehicle bumper structure including one or more crash boxes according to this embodiment in collisions is further improved.

According to an advantageous embodiment of the vehicle crash box according to the first aspect, the oblong opening has a longitudinal extension extending in a direction transverse to the longitudinal wall integrally formed with the flange. An advantage of this embodiment is that the performance of a vehicle bumper structure including one or more crash boxes according to this embodiment in collisions is further improved.

According to a further advantageous embodiment of the vehicle crash box according to the first aspect, the flange is configured for the attachment to a U-shaped member of the bumper beam, the U-shaped member having a U-shaped cross-section and being configured to open away from the tubular member in the longitudinal direction. An advantage of this embodiment is that the performance of a vehicle bumper structure including a bumper beam having a U-shaped member and one or more crash boxes according to this embodiment in collisions is further improved.

According to another advantageous embodiment of the vehicle crash box according to the first aspect, the U-shaped member of the bumper beam has a convex side and a concave side, and wherein the flange is configured for the attachment to the convex side of the U-shaped member. An advantage of this embodiment is that the performance of a vehicle bumper structure including a bumper beam having a U-shaped member and one or more crash boxes according to this embodiment in collisions is further improved.

According to yet another advantageous embodiment of the vehicle crash box according to the first aspect, the flange and the one or more longitudinal walls integrally formed with the flange are formed from a plate. This is an efficient way to produce the flange and the longitudinal wall integrally formed therewith.

According to still another advantageous embodiment of the vehicle crash box according to the first aspect, one or more of the tubular member and vehicle crash box comprises/comprise or consists/consist of a metal or a metal alloy. This is an efficient way to produce a strong tubular member or a strong vehicle crash box.

According to a second aspect of the invention, the above mentioned and other objects are achieved with a vehicle bumper structure comprising
a bumper beam, and
one or more vehicle crash boxes according to any one of the embodiments disclosed above or below.

Advantages of the vehicle bumper structure according to the second aspect correspond to advantages of the vehicle crash box according to the first aspect and its embodiments mentioned above or below and are thus not repeated here.

Advantages of the below-mentioned embodiments of the vehicle bumper structure according to the second aspect correspond to advantages of the embodiments of the vehicle crash box according to the first aspect mentioned above or below and are thus not repeated hereinbelow.

According to an advantageous embodiment of the vehicle bumper structure according to the second aspect, the bumper beam comprises a U-shaped member having a U-shaped cross-section, wherein the U-shaped member is configured to open away from the tubular member in the longitudinal direction.

The above-mentioned features and embodiments of the vehicle crash box and the vehicle bumper structure may be combined in various possible ways providing further advantageous embodiments.

Further advantageous embodiments of the vehicle crash box and the vehicle bumper structure according to the present invention and further advantages with the embodiments of the present invention emerge from the detailed description of embodiments.

### Brief Description of the Drawings

Embodiments of the invention will now be illustrated, for exemplary purposes, in more detail by way of embodiments and with reference to the enclosed drawings, where similar references are used for similar parts, in which:
- Figure 1: is a schematic perspective view of two first embodiments of the vehicle crash box according to the first aspect of the invention and of a first embodiment of the vehicle bumper structure according to the second aspect of the invention;
- Figure 2: is a schematic top view of the vehicle bumper structure and the two vehicle crash boxes of figure 1;
- Figure 3: is an enlargement of the left vehicle crash box of figure 1;
- Figure 4: is a schematic perspective view of the first embodiment of the vehicle crash box according to the first aspect of the invention;
- Figure 5: is a schematic perspective view of the first embodiment of the vehicle crash box of figure 4 but with an item removed in relation to figure 4;
- Figure 6: is a schematic rear view of the vehicle crash box of figure 5;
- Figure 7: is a schematic top view of the vehicle crash box of figure 4;
- Figure 8: is a schematic bottom view of the vehicle crash box of figure 4;
- Figure 9: is a schematic perspective view of the first embodiment of the vehicle crash box according to the first aspect of the invention positioned to the right in figure 1;
- Figure 10: is a schematic rear view of the vehicle crash box of figure 9;
- Figure 11: is a schematic perspective view of a second embodiment of the vehicle crash box according to the first aspect of the invention and of a second embodiment of the vehicle bumper structure according to the second aspect of the invention;
- Figure 12: is a schematic perspective view of a third embodiment of the vehicle crash box according to the first aspect of the invention and of a third embodiment of the vehicle bumper structure according to the second aspect of the invention; and
- Figure 13: is a schematic perspective view of a fourth embodiment of the vehicle crash box according to the first aspect of the invention and of a fourth embodiment of the vehicle bumper structure according to the second aspect of the invention.

### Detailed Description

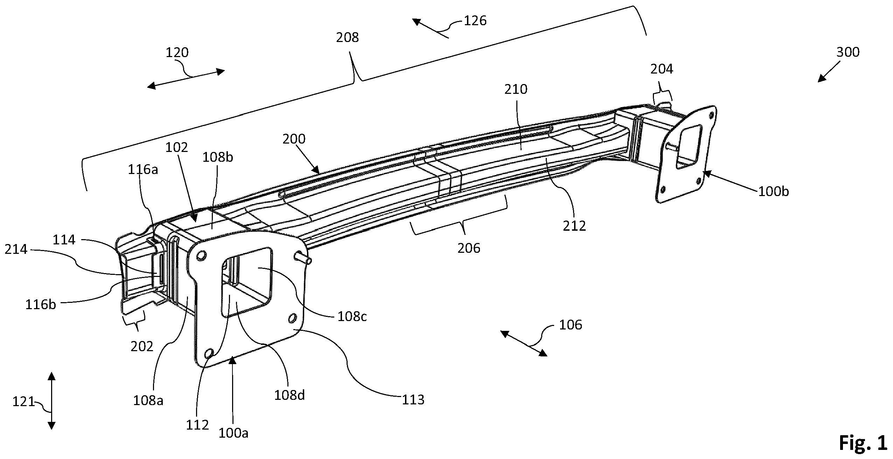

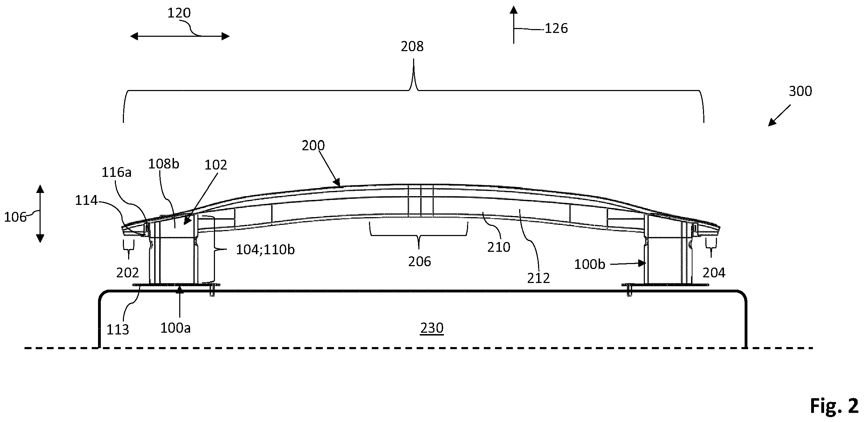

With reference to figures 1 and 2, two first embodiments of the vehicle crash box 100a, 100b for attaching, or for the attachment of, a bumper beam 200 to a vehicle 230 (see figure 2) according to the first aspect of the invention are schematically illustrated. Further, a first embodiment of the vehicle bumper structure 300 according to the second aspect of the invention is schematically illustrated. The bumper beam 200 may be provided at the front of the vehicle 230 or at the rear of the vehicle 230. For some embodiments, the bumper beam 200 may be referred to as a cross beam.

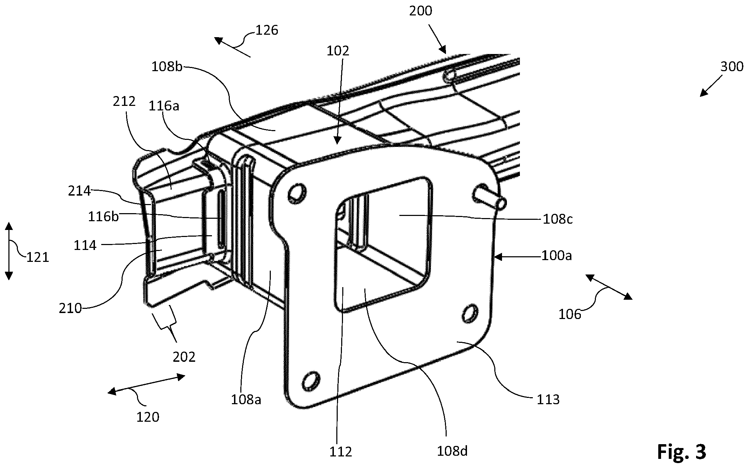

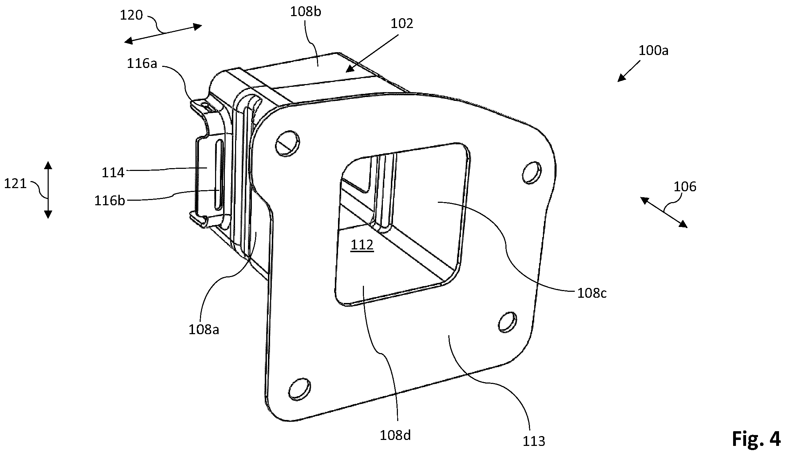

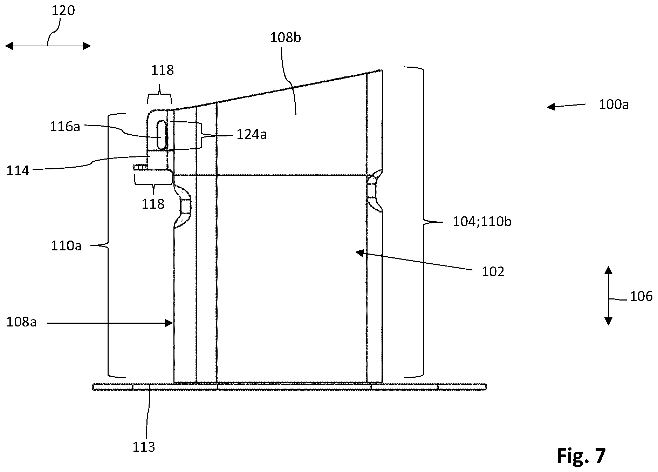

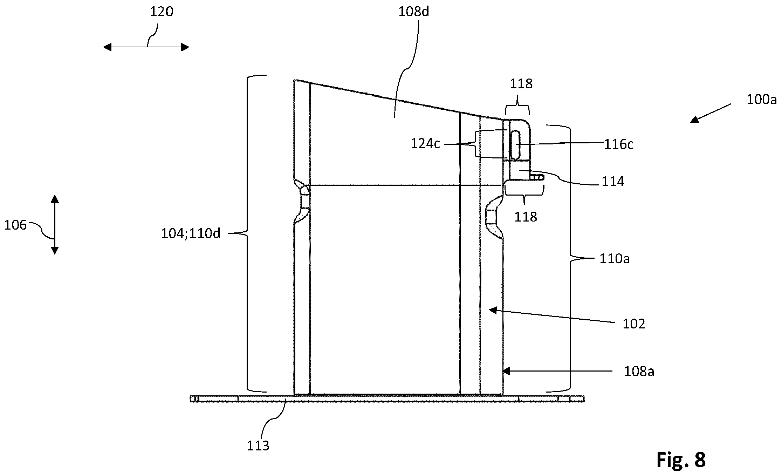

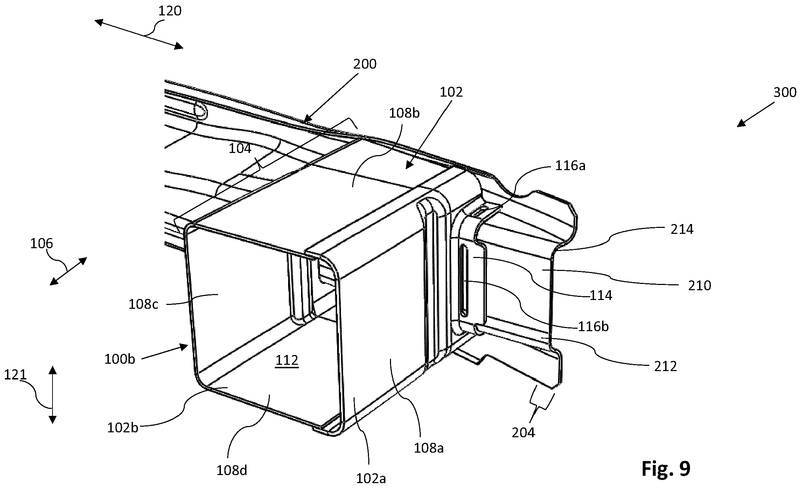

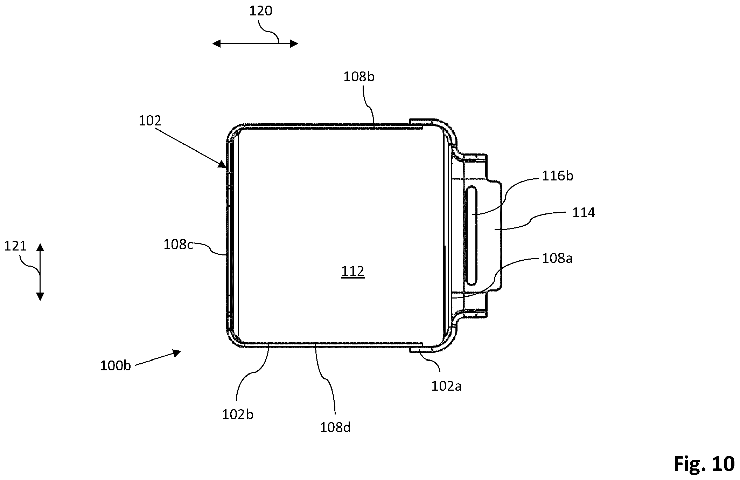

In figures 3 to 8, the vehicle crash box 100a to the left in figures 1 and 2 is schematically illustrated in further detail. In figures 9 and 10, the vehicle crash box 100b to the right in figures 1 and 2 is schematically illustrated in further detail.

With reference to figures 1 to 10, the vehicle crash box 100a, 100b is attachable to a vehicle 230, for example a motor vehicle with a combustion engine, an electric vehicle having one or more electrical machines and one or more electric batteries, or a hybrid vehicle including both a combustion engine and one or more electrical machines. For example, the vehicle 230 may be a car or a truck.

With reference to figures 1 to 8, the vehicle crash box 100a includes a tubular member 102. The tubular member 102 has a longitudinal extension 104 extending in a longitudinal direction 106. The tubular member 102 includes one or more longitudinal walls 108a-d. The longitudinal wall 108a-d has a longitudinal extension 110a-d extending in the longitudinal direction 106. It may be defined that the tubular member 102 forms, or defines, a closed space 112. For some embodiments, it may be defined that the one or more longitudinal walls 108a-d forms/form, or defines/define, the closed space 112. For some embodiments, the closed space 112 may be described as a room or a compartment. A "closed space" 112 mentioned above also includes spaces which are substantially, or essentially, closed. For example, there may one or more minor through-holes in one or more longitudinal walls 108a-d of the tubular member 102, and/or the ends of the tubular member 102 may be at least partially open.

With reference to figures 1 to 8, for some embodiments, the vehicle crash box 100a, 100b may be attachable to the vehicle 230, for example to the chassis of the vehicle 230, via an attachment 113, which may be attached, or joined, to the tubular member 102. The attachment 113 is attachable to the vehicle 230, for example to the chassis of the vehicle 230. However, other forms of attachment of the vehicle crash box 100a, 100b to the vehicle 230 are possible. The attachment 113 may be attached to the vehicle by way of various means of attachment, for example bolts, threads, welds etc.

With reference to figures 1 to 8, the vehicle crash box 100a includes one or more flanges 114 integrally formed with one or more longitudinal walls 108a-d of the one or more longitudinal walls 108a-d of the tubular member 102. In the embodiment illustrated in figures 1 to 8, the vehicle crash box 100a includes one flange 114 integrally formed with one longitudinal wall 108a of the one or more longitudinal walls 108a-d of the tubular member 102. However, for alternative embodiments, the vehicle crash box 100a may include a plurality of flanges integrally formed with one or more longitudinal walls 108a-d of the one or more longitudinal walls 108a-d of the tubular member 102, for example integrally formed with one longitudinal wall of the one or more longitudinal walls 108a-d of the tubular member 102, or integrally formed with two or more longitudinal walls of the one or more longitudinal walls 108a-d of the tubular member 102. For some embodiments, the flange 114 may be referred to as a side flange, or a lateral flange.

The fact that the flange 114 is integrally formed with a longitudinal wall 108a implies, or means, that the flange 114 and the longitudinal wall 108a are formed into a single piece and/or are formed from a single piece. For example, a blank, or any other suitable piece, may be formed into the longitudinal wall 108a and the flange 114 integrally formed therewith, by way of hot press forming, or cold working. Expressed alternatively, the fact that the flange 114 is integrally formed with a longitudinal wall 108a may imply, or may mean, that the flange 114 and the longitudinal wall 108a are made of a single piece, for example a single blank.

With reference to figures 1 to 8, the flange 114 forms one or more oblong openings 116a-c, or oblong through-holes, for one or more welds for the attachment of the flange 114 to the bumper beam 200. In the embodiment illustrated in figures 1 to 8, the flange 114 forms three oblong openings 116a-c for one or more welds. However, for alternative embodiments, the flange 114 may form fewer or more oblong openings than three oblong openings 116a-c. For some embodiments, the flange 114 may be described to comprise one or more inner walls, wherein one or more of the one or more inner walls of the flange 114 may define the one or more oblong openings 116a-c. For some embodiments, two or more oblong openings may extend parallel to one another, or side by side.

With reference to figures 1 to 8, in the illustrated embodiment, the oblong opening 116a-c of the flange 114 is located outside, or is external to, the closed space 112. In the illustrated embodiment, the flange 114 is located outside, or is external to, the closed space 112. However, for alternative embodiments, the oblong opening of the flange and/or the flange may be located inside the closed space 112.

With reference to figures 1 to 8, the flange 114 and the one or more longitudinal walls 108a-d integrally formed with the flange 114 may be formed from a plate. The tubular member 102 may comprise or consist of a metal or a metal alloy. The vehicle crash box 100a may comprise or consist of a metal or a metal alloy. However, other materials are also possible.

With reference to figures 1 and 2, the illustrated bumper beam 200 has a first end 202, a second end 204 and a middle section 206, or intermediate section. The middle section 206 is located between the first end 202 and the second end 204. For some embodiments, the vehicle crash box 100a is configured to position the tubular member 102 between the first end 202 of the bumper beam 200 and the middle section 206 of the bumper beam 200, and the vehicle crash box 100a is configured to position the flange 114 between the first end 202 of the bumper beam 200 and the tubular member 102. Thus, according to this embodiment, the flange 114 together with the one or more oblong openings 116a-c and the associated one or more welds are located toward one 202 of the first and second ends 202, 204 of the bumper beam 200 when the vehicle crash box 100a is attached to the bumper beam 200. As mentioned above, the inventor of the invention has found that the loads on the interface for the attachment of the vehicle crash box 100a to the bumper beam 200 are especially high at this location, i.e. close to the end 202, 204 of the bumper beam 200, upon a collision, for example a high-speed collision. Thus, it is advantageous to provide an increased amount of weld for the attachment of the vehicle crash box 100a to the bumper beam 200 at this location. However, for alternative embodiments, the vehicle crash box 100a may be configured to position the flange 114 between the middle section 206 of the bumper beam 200 and the tubular member 102, i.e. toward the middle section 206 of the bumper beam 200.

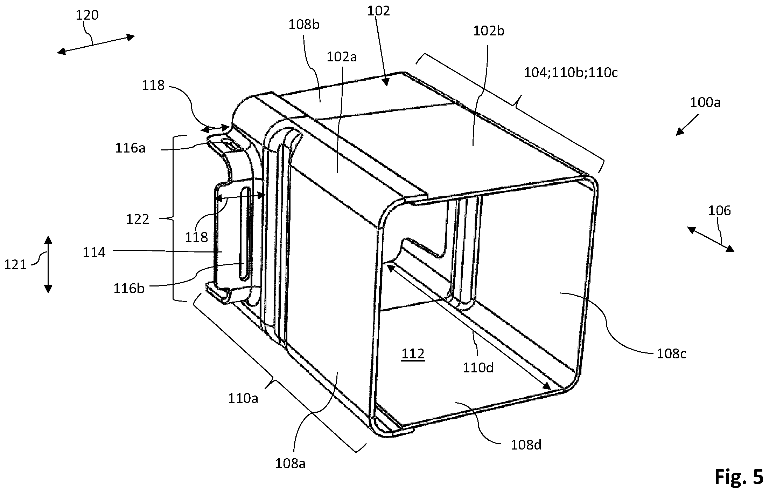

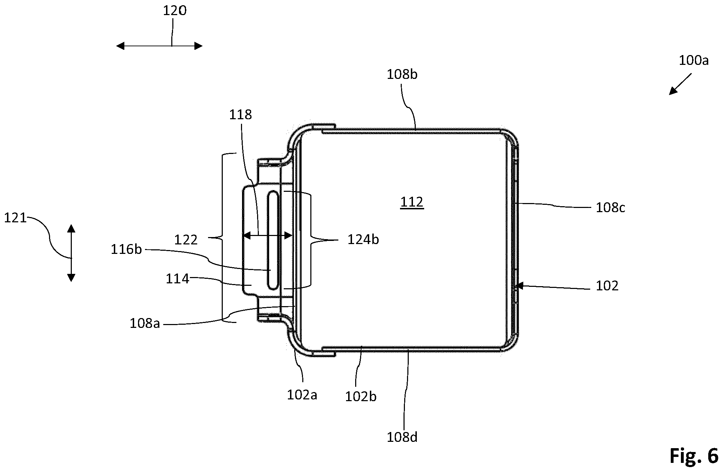

With reference to figures 5 and 6, for some embodiments, the tubular member 102 may include two or more sections 102a, 102b, for example two or more longitudinal sections 102a, 102b. The two or more sections 102a, 102b may be lateral sections 102a, 102b. Each section 102a, 102b of the tubular member 102 may include one or more of the one or more longitudinal walls 108a-d and/or include one or more portions of the one or more longitudinal walls 108a-d. In the illustrated embodiment, the section 102a of the tubular member 102 may be described as an outer section 102a, i.e. the outer section 102a is closer to the first end 202 of the bumper beam 200 in relation to the other section 102b of the tubular member 102, which may referred to as an inner section 102b, when the vehicle crash box 100a is configured to position the tubular member 102 between the first end 202 of the bumper beam 200 and the middle section 206 of the bumper beam 200. The two or more sections 102a, 102b may be joined, or attached, to one another by way of welding, or by any other means of attachment, for example an adhesive. In the illustrated embodiment, the outer section 102a of the tubular member 102 includes the longitudinal wall 108a which is integrally formed with the flange 114. In the illustrated embodiment, each section 102a, 102b of the tubular member 102 is substantially U-shaped.

With reference to figures 5 to 8, the flange 114 may be described to have a transverse extension 118 extending in a lateral direction 120 in relation to the longitudinal direction 106. The flange 114 may be described to have a transverse extension 118 extending in a direction 120 transverse to the longitudinal direction 106. The flange 114 may be described to have a transverse extension 118 extending in a direction 120 transverse to the longitudinal wall 108a integrally formed with the flange 114.

With reference to figures 5 to 6, the flange 114 may be described to have a longitudinal extension 122 extending in a direction 121 transverse to the longitudinal direction 106. The flange 114 may be described to have a longitudinal extension 122 extending in the longitudinal direction 106, or in a direction 106 parallel to the longitudinal direction 106. In the embodiment illustrated in figures 1 to 18, the longitudinal extension 122 of the flange 114 extends both in a direction 121 transverse to the longitudinal direction 106 (the middle portion of the longitudinal extension 122) and in the longitudinal direction 106 (the two end portions of the longitudinal extension 122). Thus, the flange 114 in figures 1 to 8 forms a U-shape when viewed from the side, or when viewed in a direction 120 transverse to the longitudinal direction 106 and in the direction 120 of the longitudinal extension 208 of the bumper beam 200. For some embodiments, the flange 114 may be described to have a longitudinal extension 122 extending in a direction 106, 121 parallel to the longitudinal wall 108a integrally formed with the flange 114.

With reference to figures 6 to 8, for some embodiments, the oblong opening 116a-c has a longitudinal extension 124a-c extending in the direction 106, 121 of the longitudinal extension 122 of the flange 114. For alternative embodiments, the oblong opening may have a longitudinal extension extending in a direction 120 transverse to the direction 106, 121 of the longitudinal extension 122 of the flange 114. The oblong opening 116b may have a longitudinal extension 124b extending in a direction 121 transverse to the longitudinal direction 106. The oblong opening 116a, 116c may have a longitudinal extension 124a, 124c extending in the longitudinal direction 106, or in a direction 106 parallel to the longitudinal direction 106. For some embodiments, it may be defined that the longitudinal extension 124a-c of the oblong opening 116a-c exceeds the width, or the transverse extension, of the oblong opening 116a-c. For some embodiments, the longitudinal extension 124a-c of the oblong opening 116a-c is at least twice as long as the width of the oblong opening 116a-c. For alternative embodiments, the longitudinal extensions of two or more oblong openings may extend side by side. For some embodiments, the longitudinal extension 124a-c of one or more oblong openings 116a-c may be straight, or substantially straight. For some embodiments, the longitudinal extension of one or more oblong openings may be curved, and may, for example, form a curve. For some embodiments, it may be described that the one or more oblong openings 116a-c is/are straight or curved.

With reference to figures 1 to 8, the bumper beam 200 has a longitudinal extension 208 configured to extend in a direction 120 transverse to the longitudinal direction 106. The oblong opening 116a-c may be described to have a longitudinal extension 124a-c extending in a direction 106, 121 transverse to the direction 120 of the longitudinal extension 208 of the bumper beam 200.

With reference to figures 1 to 8, the oblong opening 116a-c may be described to have a longitudinal extension 124a-c extending in a direction parallel to the longitudinal wall 108a integrally formed with the flange 114. For alternative embodiments, the oblong opening may have a longitudinal extension extending in a direction 120 transverse to the longitudinal wall 108a integrally formed with the flange 114.

With reference to figures 1 to 8, for some embodiments, the flange 114 may be configured for the attachment to a U-shaped member 210 of the bumper beam 200. The U-shaped member 210 has a U-shaped cross-section and is configured to open away from, or configured to open in a direction 126 away from, the tubular member 102 in the longitudinal direction 106. The U-shaped member 210 of the bumper beam 200 may be defined to have a convex side 212 and a concave side 214. The flange 114 may be configured for the attachment to the convex side 212 of the U-shaped member 210 of the bumper beam 200. For some embodiments, the U-shaped member 210 may be referred to as a cross member.

With reference to figures 1 and 2, and as mentioned above, a first embodiment of the vehicle bumper structure 300 according to the second aspect of the invention is schematically illustrated. The vehicle bumper structure 300 includes a bumper beam 200 according any one of the embodiments disclose above or below. The vehicle bumper structure 300 includes one or more vehicle crash boxes 100a, 100b, for example two vehicle crash boxes 100a, 100b, according to any one of the embodiments disclose above or below. For embodiments of the vehicle bumper structure 300, the vehicle crash boxes 100a, 100b may be defined to be attached to the bumper beam 200, for example via the one or more flanges 114, for example by way of one or more welds. For embodiments of the vehicle bumper structure 300 and as mentioned above, the bumper beam 200 may include a U-shaped member 210 having a U-shaped cross-section and being configured to open away from the tubular member 102 in the longitudinal direction 106.

For some embodiments, two or more welds may be applied in parallel in the same oblong opening 116a-c. For example, the one or more welds may be applied by way of MIG (metal inert gas), MAG (metal active gas), or CMT (cold metal transfer), welding, or by way of any other suitable welding procedure.

With reference to figures 1 and 2, for some embodiments, the vehicle bumper structure 300 may comprise the one or more welds. For some embodiments of the vehicle bumper structure 300, it may be defined that the flange 114 is attached to the bumper beam 200, and thus attaching the vehicle crash box 100a, 100b to the bumper beam 200, for example by way of the one or more welds.

For some embodiments, the bumper beam 200 may include, or may be provided with, one or more patches, for example attached to the convex side 212 of the U-shaped member 210 of the bumper beam 200. When such a patch is present, the flange 114 may be attachable, or attached, to said patch.

With reference to figures 9 and 10, the vehicle crash box 100b to the right in figures 1 and 2 is schematically illustrated in further detail. The vehicle crash box 100b illustrated in figures 9 and 10 essentially corresponds to the vehicle crash box 100a of figures 3 to 8. However, the vehicle crash box 100b in figures 9 and 10 is configured to position the tubular member 102 between the second end 204 of the bumper beam 200 and the middle section 206 of the bumper beam 200, and the vehicle crash box 100b is configured to position the flange 114 between the second end 202 of the bumper beam 200 and the tubular member 102. Thus, according to the embodiment of figures 9 and 10, the flange 114 together with the one or more oblong openings 116a-c and the associated one or more welds are located toward the second end 204 of the bumper beam 200 when the vehicle crash box 100b is attached to the bumper beam 200.

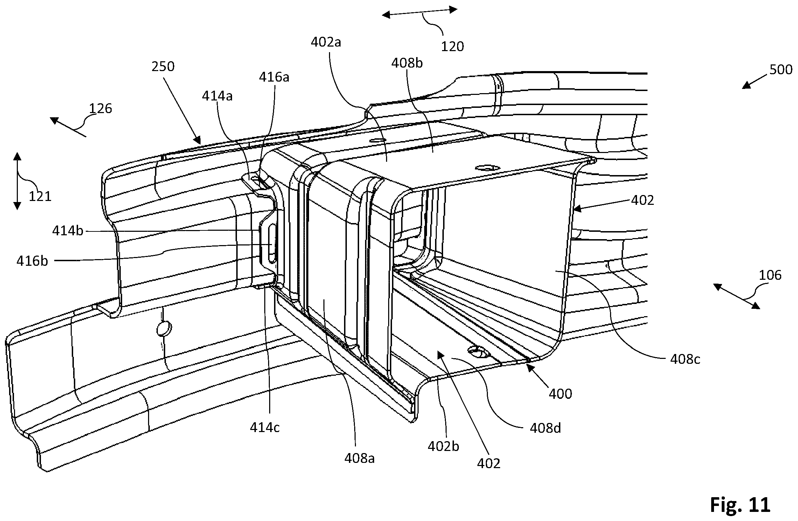

With reference to figure 11, a second embodiment of the vehicle crash box 400 according to the first aspect of the invention and a second embodiment of the vehicle bumper structure 500 according to the second aspect of the invention are schematically illustrated. Several features of the the vehicle crash box 400 of figure 11 may correspond to features of the vehicle crash box 100a of figures 1 to 8, and several features of the vehicle bumper structure 500 of figure 11 may correspond to features of the vehicle bumper structure 300 of figures 1 and 2 and are thus not described in further detail here to avoid repetition. The vehicle crash box 400 of figure 11 differs from the vehicle crash box 100a of figures 1 to 8 in that the vehicle crash box 400 comprises three flanges 414a-c integrally formed with one longitudinal wall 408a of the one or more longitudinal walls 408a-d of the tubular member 402, wherein each flange 414a-c comprises an oblong opening 416a-b for one or more welds for the attachment of the flange 414a-c to a bumper beam 250 (the oblong opening of the lower flange 414c is not shown in figure 11). The three flanges 414a-c are spaced apart from one another. Further, the vehicle crash box 400 of figure 11 differs from the vehicle crash box 100a of figures 1 to 8 in that the sections 402a, 402b of the tubular member 402 are configured and arranged in a different manner. Each section 402a, 402b of the tubular member 402 of figure 11 is substantially L-shaped.

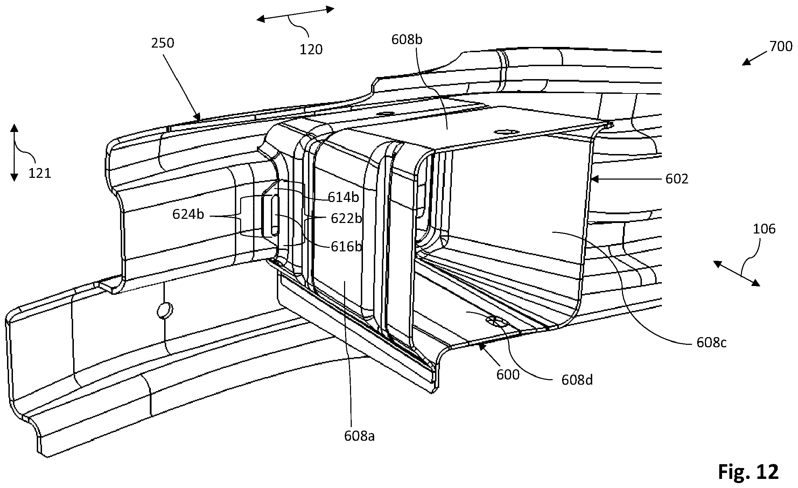

With reference to figure 12, a third embodiment of the vehicle crash box 600 according to the first aspect of the invention and a third embodiment of the vehicle bumper structure 700 according to the second aspect of the invention are schematically illustrated. Several features of the the vehicle crash box 600 of figure 12 may correspond to features of the vehicle crash box 400 of figure 11, and several features of the vehicle bumper structure 700 of figure 12 may correspond to features of the vehicle bumper structure 500 of figure 11 and are thus not described in further detail here to avoid repetition. The vehicle crash box 600 of figure 12 differs from the vehicle crash box 400 of figure 11 in that the vehicle crash box 600 comprises only one flange 614b integrally formed with one longitudinal wall 608a of the one or more longitudinal walls 608a-d of the tubular member 602. The flange 614b has a longitudinal extension 622b extending in a direction 121 transverse to the longitudinal direction 106. The oblong opening 616b of the flange 614b of figure 12 has a longitudinal extension 624b extending in a direction 121 transverse to the longitudinal direction 106. The oblong opening 616b of figure 12 has a longitudinal extension 624b extending in a direction 121 transverse to the direction 120 of the longitudinal extension of the bumper beam 250.

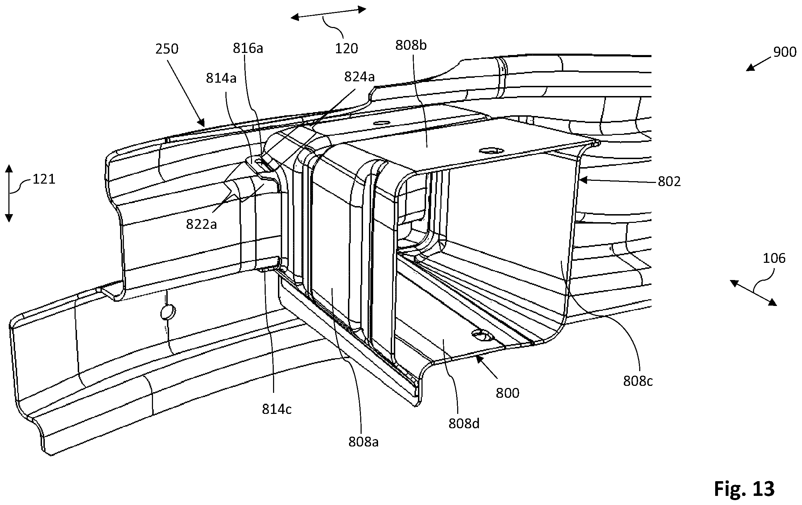

With reference to figure 13, a fourth embodiment of the vehicle crash box 800 according to the first aspect of the invention and a fourth embodiment of the vehicle bumper structure 900 according to the second aspect of the invention are schematically illustrated. Several features of the the vehicle crash box 800 of figure 13 may correspond to features of the vehicle crash box 400 of figure 11, and several features of the vehicle bumper structure 900 of figure 13 may correspond to features of the vehicle bumper structure 500 of figure 11 and are thus not described in further detail here to avoid repetition. The vehicle crash box 800 of figure 13 differs from the vehicle crash box 400 of figure 11 in that the vehicle crash box 800 comprises only two flanges 814a, 814c integrally formed with one longitudinal wall 808a of the one or more longitudinal walls 808a-d of the tubular member 802. Each one 814a, 814c of two flanges 814a, 814c has a longitudinal extension 822a extending in the longitudinal direction 106 and comprises an oblong opening 816a for one or more welds for the attachment of the flange 814a, 814c to a bumper beam 250 (the oblong opening of the lower flange 814c is not shown in figure 13). The oblong opening 816a of the flange 814a, 814c of figure 13 has a longitudinal extension 824a extending in the longitudinal direction 106. The oblong opening 816a of figure 13 has a longitudinal extension 824a extending in a direction 106 transverse to the direction 120 of the longitudinal extension of the bumper beam 250.

Each one of the tubular members 102, 402, 602, 802 illustrated above have four longitudinal walls. However, for alternative embodiments, the tubular member may comprise any other number of longitudinal walls. For example, the tubular member may have a circular or oval cross-section and may comprise one longitudinal wall. Other tubular members may have two or three longitudinal walls. Other tubular members may have more than four longitudinal walls.

The features of the different embodiments of the vehicle crash box and the vehicle bumper structure disclosed above may be combined in various possible ways providing further advantageous embodiments.

The invention shall not be considered limited to the embodiments illustrated, but can be modified and altered in many ways by one skilled in the art without departing from the scope of the appended claims.

## Claims

1. A vehicle crash box (100a, 100b; 400; 600; 800) for attaching a bumper beam (200) to a vehicle (230),
wherein the vehicle crash box (100a) is attachable to the vehicle (230),
wherein the vehicle crash box (100a) comprises a tubular member (102) having a longitudinal extension (104) extending in a longitudinal direction (106),
wherein the tubular member (102) comprises one or more longitudinal walls (108a-d) having a longitudinal extension (110a-d) extending in the longitudinal direction (106),
wherein the vehicle crash box (100a) comprises one or more flanges (114) integrally formed with one or more longitudinal walls (108a-d) of the one or more longitudinal walls (108a-d) of the tubular member (102) in that the one or more flanges (114) and the one or more longitudinal walls (108a-d) are formed from a single piece by way of hot press forming or cold working, and
wherein the flange forms one or more oblong openings (116a-c) for one or more welds for the attachment of the flange (114) to the bumper beam (200).

2. A vehicle crash box (100a, 100b; 400; 600; 800) according to claim 1, wherein the tubular member (102) forms a closed space (112), and
wherein the flange (114) is located outside the closed space (112).

3. A vehicle crash box (100a, 100b; 400; 600; 800) according to claim 1 or 2, wherein the bumper beam (200) comprises a first end (202), a second end (204) and a middle section (206) located between the first and second ends (202, 204),
wherein the vehicle crash box (100a) is configured to position the tubular member (102) between the first end (202) of the bumper beam (200) and the middle section (206) of the bumper beam (200), and
wherein the vehicle crash box (100a) is configured to position the flange (114) between the first end (202) of the bumper beam (200) and the tubular member (102).

4. A vehicle crash box (100a, 100b; 400; 600; 800) according to any one of the claims 1 to 3, wherein the flange (114) has a transverse extension (118) extending in a lateral direction (120) in relation to the longitudinal direction (106).

5. A vehicle crash box (100a, 100b; 400; 600) according to any one of the claims 1 to 4, wherein the flange (114) has a longitudinal extension (122) extending in a direction (121) transverse to the longitudinal direction (106).

6. A vehicle crash box (100a, 100b; 400; 800) according to any one of the claims 1 to 5, wherein the flange (114) has a longitudinal extension (122) extending in the longitudinal direction (106).

7. A vehicle crash box (100a, 100b; 400; 600; 800) according to claim 5 or 6, wherein the oblong opening (116a-c) has a longitudinal extension (124a-c) extending in the direction (106, 121) of the longitudinal extension (122) of the flange (114).

8. A vehicle crash box (100a, 100b; 400; 600) according to any one of the claims 1 to 7, wherein the oblong opening (116b) has a longitudinal extension (124b) extending in a direction (121) transverse to the longitudinal direction (106).

9. A vehicle crash box (100a, 100b; 400; 800) according to any one of the claims 1 to 8, wherein the oblong opening (116a, 116c) has a longitudinal extension (124a, 124c) extending in the longitudinal direction (106).

10. A vehicle crash box (100a, 100b; 400; 600; 800) according to any one of the claims 1 to 9, wherein the bumper beam (200) has a longitudinal extension (208) configured to extend in a direction (120) transverse to the longitudinal direction (106), and
wherein the oblong opening (116a-c) has a longitudinal extension (124a-c) extending in a direction (106, 121) transverse to the direction (120) of the longitudinal extension (208) of the bumper beam (200).

11. A vehicle crash box (100a, 100b; 400; 600; 800) according to any one of the claims 1 to 10, wherein the flange (106) is configured for the attachment to a U-shaped member (210) of the bumper beam (200), the U-shaped member (210) having a U-shaped cross-section and being configured to open away from the tubular member (102) in the longitudinal direction (106).

12. A vehicle crash box (100a, 100b; 400; 600; 800) according to claim 11, wherein the U-shaped member (210) of the bumper beam (200) has a convex side (212) and a concave side (214), and wherein the flange (114) is configured for the attachment to the convex side (212) of the U-shaped member (210).

13. A vehicle crash box (100a, 100b; 400; 600; 800) according to any one of the claims 1 to 12, wherein the flange (114) and the one or more longitudinal walls (108a-d) integrally formed with the flange (114) are formed from a plate.

14. A vehicle crash box (100a, 100b; 400; 600; 800) according to any one of the claims 1 to 13, wherein one or more of the tubular member (102) and vehicle crash box (100a) comprises/comprise or consists/consist of a metal or a metal alloy.

15. A vehicle bumper structure (300; 500; 700; 900) comprising
a bumper beam (200; 250), and
one or more vehicle crash boxes (100a, 100b; 400; 600; 800) according to any one of the claims 1 to 14.

## Patentansprüche

1. Fahrzeug-Crashbox (100a, 100b; 400; 600; 800) zum Befestigen eines Stoßstangenträgers (200) an einem Fahrzeug (230),
wobei die Fahrzeug-Crashbox (100a) an dem Fahrzeug (230) befestigbar ist,
wobei die Fahrzeug-Crashbox (100a) ein rohrförmiges Element (102) umfasst, das eine sich in einer Längsrichtung (106) erstreckende Längserstreckung (104) aufweist,
wobei das rohrförmige Element (102) eine oder mehrere Längswände (108a-d) umfasst, die eine sich in der Längsrichtung (106) erstreckende Längserstreckung (110a-d) aufweisen,
wobei die Fahrzeug-Crashbox (100a) einen oder mehrere Flansche (114) umfasst, die insofern integral mit einer oder mehreren Längswänden (108a-d) der einen oder der mehreren Längswände (108a-d) des rohrförmigen Elements (102) gebildet sind, dass der oder die mehreren Flansche (114) und die eine oder die mehreren Längswände (108a-d) aus einem einzigen Stück mittels Warmpressformen oder Kaltumformen gebildet sind, und
wobei der Flansch eine oder mehrere längliche Öffnungen (116a-c) für eine oder mehrere Schweißungen zur Befestigung des Flanschs (114) an dem Stoßstangenträger (200) bildet.

2. Fahrzeug-Crashbox (100a, 100b; 400; 600; 800) nach Anspruch 1, wobei das rohrförmige Element (102) einen geschlossenen Raum (112) bildet, und
wobei sich der Flansch (114) außerhalb des geschlossenen Raums (112) befindet.

3. Fahrzeug-Crashbox (100a, 100b; 400; 600; 800) nach Anspruch 1 oder 2, wobei der Stoßstangenträger (200) ein erstes Ende (202), ein zweites Ende (204) und einen mittleren Abschnitt (206) umfasst, der sich zwischen dem ersten und dem zweiten Ende (202, 204) befindet,
wobei die Fahrzeug-Crashbox (100a) derart ausgestaltet ist, dass das rohrförmige Element (102) zwischen dem ersten Ende (202) des Stoßstangenträgers (200) und dem mittleren Abschnitt (206) des Stoßstangenträgers (200) positioniert ist, und
wobei die Fahrzeug-Crashbox (100a) derart ausgestaltet ist, dass der Flansch (114) zwischen dem ersten Ende (202) des Stoßstangenträgers (200) und dem rohrförmigen Element (102) positioniert ist.

4. Fahrzeug-Crashbox (100a, 100b; 400; 600; 800) nach einem der Ansprüche 1 bis 3, wobei der Flansch (114) eine Quererstreckung (118) aufweist, die sich in einer lateralen Richtung (120) in Relation zur Längsrichtung (106) erstreckt.

5. Fahrzeug-Crashbox (100a, 100b; 400; 600) nach einem der Ansprüche 1 bis 4, wobei der Flansch (114) eine Längserstreckung (122) aufweist, die sich in einer Richtung (121) quer zur Längsrichtung (106) erstreckt.

6. Fahrzeug-Crashbox (100a, 100b; 400; 800) nach einem der Ansprüche 1 bis 5, wobei der Flansch (114) eine Längserstreckung (122) aufweist, die sich in der Längsrichtung (106) erstreckt.

7. Fahrzeug-Crashbox (100a, 100b; 400; 600; 800) nach Anspruch 5 oder 6, wobei die längliche Öffnung (116a-c) eine Längserstreckung (124a-c) aufweist, die sich in der Richtung (106, 121) der Längserstreckung (122) des Flanschs (114) erstreckt.

8. Fahrzeug-Crashbox (100a, 100b; 400; 600) nach einem der Ansprüche 1 bis 7, wobei die längliche Öffnung (116b) eine Längserstreckung (124b) aufweist, die sich in einer Richtung (121) quer zur Längsrichtung (106) erstreckt.

9. Fahrzeug-Crashbox (100a, 100b; 400; 800) nach einem der Ansprüche 1 bis 8, wobei die längliche Öffnung (116a, 116c) eine Längserstreckung (124a, 124c) aufweist, die sich in der Längsrichtung (106) erstreckt.

10. Fahrzeug-Crashbox (100a, 100b; 400; 600; 800) nach einem der Ansprüche 1 bis 9, wobei der Stoßstangenträger (200) eine Längserstreckung (208) aufweist, die derart ausgestaltet ist, dass sie sich in einer Richtung (120) quer zur Längsrichtung (106) erstreckt, und
wobei die längliche Öffnung (116a-c) eine Längserstreckung (124a-c) aufweist, die sich in einer Richtung (106, 121) quer zur Richtung (120) der Längserstreckung (208) des Stoßstangenträgers (200) erstreckt.

11. Fahrzeug-Crashbox (100a, 100b; 400; 600; 800) nach einem der Ansprüche 1 bis 10, wobei der Flansch (106) zur Befestigung an einem U-förmigen Element (210) des Stoßstangenträgers (200) ausgestaltet ist, wobei das U-förmige Element (210) einen U-förmigen Querschnitt aufweist und derart ausgestaltet ist, dass es sich entfernt von dem rohrförmigen Element (102) in der Längsrichtung (106) öffnet.

12. Fahrzeug-Crashbox (100a, 100b; 400; 600; 800) nach Anspruch 11, wobei das U-förmige Element (210) des Stoßstangenträgers (200) eine konvexe Seite (212) und eine konkave Seite (214) aufweist, und wobei der Flansch (114) zur Befestigung an der konvexen Seite (212) des U-förmigen Elements (210) ausgestaltet ist.

13. Fahrzeug-Crashbox (100a, 100b; 400; 600; 800) nach einem der Ansprüche 1 bis 12, wobei der Flansch (114) und die eine oder die mehreren Längswände (108a-d), die integral mit dem Flansch (114) gebildet sind, aus einer Platte gebildet sind.

14. Fahrzeug-Crashbox (100a, 100b; 400; 600; 800) nach einem der Ansprüche 1 bis 13, wobei eines oder mehrere des rohrförmigen Elements (102) und der Fahrzeug-Crashbox (100a) ein Metall oder eine Metalllegierung umfasst/umfassen oder daraus besteht/bestehen.

15. Fahrzeugstoßstangenstruktur (300; 500; 700; 900), umfassend
einen Stoßstangenträger (200; 250), und
eine oder mehrere Fahrzeug-Crashboxen (100a, 100b; 400; 600; 800) nach einem der Ansprüche 1 bis 14.

## Revendications

1. Boîte-tampon de véhicule (100a, 100b ; 400 ; 600 ; 800) pour fixer une poutre de pare-chocs (200) à un véhicule (230),
dans laquelle la boîte-tampon de véhicule (100a) peut être fixée au véhicule (230),
dans laquelle la boîte-tampon de véhicule (100a) comprend un élément tubulaire (102) ayant une extension longitudinale (104) s'étendant dans une direction longitudinale (106),
dans laquelle l'élément tubulaire (102) comprend une ou plusieurs parois longitudinales (108a-d) ayant une extension longitudinale (110a-d) s'étendant dans la direction longitudinale (106),
dans laquelle la boîte-tampon de véhicule (100a) comprend une ou plusieurs brides (114) formées d'un seul tenant avec une ou plusieurs parois longitudinales (108ad) des une ou plusieurs parois longitudinales (108a-d) de l'élément tubulaire (102) de sorte que les une ou plusieurs brides (114) et les une ou plusieurs parois longitudinales (108a-d) sont formées d'une seule pièce au moyen d'un formage par pressage à chaud ou d'un formage à froid, et
dans laquelle la bride forme une ou plusieurs ouvertures oblongues (116a-c) pour une ou plusieurs soudures pour la fixation de la bride (114) à la poutre de pare-chocs (200).

2. Boîte-tampon de véhicule (100a, 100b ; 400 ; 600 ; 800) selon la revendication 1, dans laquelle l'élément tubulaire (102) forme un espace fermé (112), et
dans laquelle la bride (114) est située à l'extérieur de l'espace fermé (112).

3. Boîte-tampon de véhicule (100a, 100b ; 400 ; 600 ; 800) selon la revendication 1 ou 2, dans laquelle la poutre de pare-chocs (200) comprend une première extrémité (202), une seconde extrémité (204) et une section intermédiaire (206) située entre les première et seconde extrémités (202, 204),
dans laquelle la boîte-tampon de véhicule (100a) est configurée pour positionner l'élément tubulaire (102) entre la première extrémité (202) de la poutre de pare-chocs (200) et la section intermédiaire (206) de la poutre de pare-chocs (200), et
dans laquelle la boîte-tampon de véhicule (100a) est configurée pour positionner la bride (114) entre la première extrémité (202) de la poutre de pare-chocs (200) et l'élément tubulaire (102).

4. Boîte-tampon de véhicule (100a, 100b ; 400 ; 600 ; 800) selon l'une quelconque des revendications 1 à 3, dans laquelle la bride (114) a une extension transversale (118) s'étendant dans une direction latérale (120) par rapport à la direction longitudinale (106).

5. Boîte-tampon de véhicule (100a, 100b ; 400 ; 600) selon l'une quelconque des revendications 1 à 4, dans laquelle la bride (114) a une extension longitudinale (122) s'étendant dans une direction (121) transversale à la direction longitudinale (106).

6. Boîte-tampon de véhicule (100a, 100b ; 400 ; 800) selon l'une quelconque des revendications 1 à 5, dans laquelle la bride (114) a une extension longitudinale (122) s'étendant dans la direction longitudinale (106).

7. Boîte-tampon de véhicule (100a, 100b ; 400 ; 600 ; 800) selon la revendication 5 ou 6, dans laquelle l'ouverture oblongue (116a-c) a une extension longitudinale (124a-c) s'étendant dans la direction (106, 121) de l'extension longitudinale (122) de la bride (114).

8. Boîte-tampon de véhicule (100a, 100b ; 400 ; 600) selon l'une quelconque des revendications 1 à 7, dans laquelle l'ouverture oblongue (116b) a une extension longitudinale (124b) s'étendant dans une direction (121) transversale à la direction longitudinale (106).

9. Boîte-tampon de véhicule (100a, 100b ; 400 ; 800) selon l'une quelconque des revendications 1 à 8, dans laquelle l'ouverture oblongue (116a, 116c) a une extension longitudinale (124a, 124c) s'étendant dans la direction longitudinale (106).

10. Boîte-tampon de véhicule (100a, 100b ; 400 ; 600 ; 800) selon l'une quelconque des revendications 1 à 9, dans laquelle la poutre de pare-chocs (200) a une extension longitudinale (208) configurée pour s'étendre dans une direction (120) transversale à la direction longitudinale (106), et
dans laquelle l'ouverture oblongue (116a-c) a une extension longitudinale (124a-c) s'étendant dans une direction (106, 121) transversale à la direction (120) de l'extension longitudinale (208) de la poutre de pare-chocs (200).

11. Boîte-tampon de véhicule (100a, 100b ; 400 ; 600 ; 800) selon l'une quelconque des revendications 1 à 10, dans laquelle la bride (106) est configurée pour la fixation à un élément en forme de U (210) de la poutre de pare-chocs (200), l'élément en forme de U (210) ayant une section transversale en forme de U et étant configuré pour s'ouvrir en s'éloignant de l'élément tubulaire (102) dans la direction longitudinale (106).

12. Boîte-tampon de véhicule (100a, 100b ; 400 ; 600 ; 800) selon la revendication 11, dans laquelle l'élément en forme de U (210) de la poutre de pare-chocs (200) a un côté convexe (212) et un côté concave (214), et dans laquelle la bride (114) est configurée pour la fixation au côté convexe (212) de l'élément en forme de U (210).

13. Boîte-tampon de véhicule (100a, 100b ; 400 ; 600 ; 800) selon l'une quelconque des revendications 1 à 12, dans laquelle la bride (114) et les une ou plusieurs parois longitudinales (108a-d) formées d'un seul tenant avec la bride (114) sont formées à partir d'une plaque.

14. Boîte-tampon de véhicule (100a, 100b ; 400 ; 600 ; 800) selon l'une quelconque des revendications 1 à 13, dans laquelle un ou plusieurs de l'élément tubulaire (102) et de la boîte-tampon de véhicule (100a) comprend/comprennent ou est/sont constitué(s) d'un métal ou d'un alliage métallique.

15. Structure de pare-chocs de véhicule (300 ; 500 ; 700 ; 900) comprenant
une poutre de pare-chocs (200 ; 250), et
une ou plusieurs boîtes-tampons de véhicule (100a, 100b ; 400 ; 600 ; 800) selon l'une quelconque des revendications 1 à 14.
